# FASCICULE DE BREVET EUROPEEN

(11) **EP 1 139 537 B1**
(45) Date de publication et mention de la délivrance du brevet: **16.09.2009**
(21) Numéro de dépôt: 01400432.9
(22) Date de dépôt: 19.02.2001
(51) Int. Cl.: H02G 3/10

(54) **Boîtier pour appareillage à disposer le long d'une goulotte, notamment pour appareillage électrique**
Einbaudose für elektrisches Gerät zur Montage entlang einem Kabelkanal
Electrical apparatus box to be placed alongside a cable duct

(30) Priorité: 24.03.2000 FR 0003784
(43) Date de publication de la demande: 04.10.2001
(73) Titulaire: Legrand France, 87000 Limoges (FR); Legrand SNC, 87000 Limoges (FR)
(72) Inventeur: Buard, Yvon, 53600 Voutre (FR)
(74) Mandataire: Santarelli

(56) Documents cités:
- FR-A- 2 595 513

## Description

La présente invention concerne d'une manière générale l'implantation d'un appareillage, et plus particulièrement d'un appareillage électrique, le long d'une goulotte intervenant en saillie sur une paroi et assurant le logement et la protection des câbles ou conducteurs électriques assurant la desserte d'un tel appareillage.

Par goulotte, on entend ici, de manière usuelle, un conduit comportant, globalement, d'une part, un socle, par lequel il est adapté à être appliqué à la paroi concernée, et dont la section transversale est ouverte, et, d'autre part, un couvercle qui, pour la fermeture de ce socle, est dûment rapporté sur celui-ci, par exemple par encliquetage.

La goulotte dont il est question ici est généralement de petites dimensions, appelée encore moulure.

La présente invention vise plus particulièrement le cas où l'implantation d'un appareillage le long d'une goulotte se fait à la faveur d'un boîtier comportant, d'une part, un cadre qui, adapté à être rapporté sur cette paroi, est apte à former un logement pour l'appareillage concerné, et qui, le long d'un de ses côtés par lequel il doit côtoyer la goulotte, présente une ouverture, et, d'autre part, un auvent qui, s'étendant à compter du cadre, en correspondance avec ladite ouverture, est destiné à recouvrir localement la goulotte, transversalement par rapport à celle-ci, en s'étendant en pratique sur le socle de cette goulotte, entre deux tronçons de son couvercle.

L'une des difficultés à surmonter dans la réalisation d'un tel boîtier réside dans le fait que les goulottes susceptibles d'être concernées peuvent avoir des largeurs ou hauteurs différentes.

Dans le document FR 2 595 513, il est proposé, pour surmonter cette difficulté, de dissocier l'auvent du cadre du boîtier, et de l'engager plus ou moins dans ce cadre en fonction de la largeur ou hauteur de la goulotte.

Mais, pour que la longueur de l'auvent éventuellement en surplus dans le boîtier, n'interfère pas intempestivement avec les autres constituants présents dans celui-ci, il est nécessaire d'éliminer par découpe cette longueur en surplus, en tronçonnant l'auvent en conséquence, ce qui, à la pose, complique d'autant les opérations correspondantes.

Dans le document EP 0 633 639, il est proposé un auvent amovible par rapport au cadre du boîtier, dont la largeur est adaptée à la largeur ou la hauteur de la goulotte sur laquelle le boîtier doit être rapporté, et qui comporte sur une tranche des languettes d'encliquetage venant coopérer avec la tranche de l'ouverture concernée du cadre du boîtier pour solidariser l'auvent audit cadre. Cela implique qu'à un auvent adapté à une largeur ou hauteur de goulotte peut être substitué un autre auvent adapté à une largeur ou hauteur de goulotte différente.

Mais cette disposition conduit à une multiplication dispendieuse des fabrications, au détriment des coûts.

La présente invention a d'une manière générale pour objet une disposition de cadre et d'auvent de boîtier permettant d'éviter les inconvénients précités.

Plus précisément, elle a pour objet un boîtier pour appareillage du type précité en introduction, caractérisé en ce que l'auvent comprend une partie mobile pourvue de deux bras parallèles qui sont montés coulissants à l'intérieur dudit cadre de sorte que le positionnement de la partie mobile de l'auvent par rapport au cadre est réalisé de manière télescopique selon une série de positions stables prédéfinies correspondant à différentes largeurs de goulottes.

Ainsi, il suffit d'ajuster en position la partie mobile de l'auvent par rapport au cadre pour adapter la longueur de cet auvent à la largeur ou hauteur de la goulotte associée.

Selon une caractéristique particulièrement avantageuse du boîtier conforme à l'invention, chaque bras de la partie mobile de l'auvent comprend au moins une butée apte à coopérer avec une butée portée à l'extrémité d'une lame souple solidaire du cadre et tournée vers ledit bras correspondant.

Cette coopération de butées constitue avantageusement des moyens de solidarisation et de guidage de la partie mobile de l'auvent et du cadre, ce qui permet, notamment, lors de la fabrication du boîtier, d'assembler ses deux parties du boîtier de manière définitive. Cela permet en outre de faciliter la mise en place de l'ensemble par l'installateur, de réduire le volume de l'ensemble à conditionner et de faciliter ce conditionnement.

Selon une autre caractéristique préférentielle du boîtier conforme à l'invention, l'auvent comprend une partie fixe solidaire du cadre.

Plus particulièrement, cette partie fixe de l'auvent vient de formation avec le cadre, et elle comprend, d'une part, une paroi avant qui, à partir de ladite ouverture du cadre, prolonge sur une certaine hauteur la paroi de façade du cadre du boîtier, et, d'autre part, deux parois latérales prolongeant chacune une paroi latérale du cadre du boîtier, et la partie mobile de l'auvent comprend une paroi avant dont deux bords latéraux parallèles sont prolongés par lesdits bras et une paroi d'embout s'étendant perpendiculairement à la paroi avant à partir de son bord avant opposé aux bras, la paroi avant de la partie mobile de l'auvent étant apte à coulisser sous la paroi avant de la partie fixe de celui-ci.

Ainsi, la longueur éventuellement en surplus de la partie mobile de l'auvent est avantageusement dissimulée sous la partie fixe de celui-ci, sans faire saillie dans le cadre du boîtier, et, donc, sans interférer avec les autres constituants présents dans ce boîtier.

D'autres caractéristiques avantageuses et non limitatives du boîtier conforme à l'invention sont les suivantes :
- une desdites parois avant des parties fixe et mobile de l'auvent comporte une série d'encoches échelonnées sur la hauteur de celle-ci, et l'autre desdites parois avant comporte une nervure apte à coopérer avec lesdites encoches pour positionner selon une série de positions stables la partie mobile de l'auvent par rapport à ladite partie fixe de celui-ci ;
- lesdites encoches sont prévues sur la face interne de la paroi avant de la partie fixe de l'auvent et ladite nervure fait faiblement saillie de la face externe de la paroi avant de la partie mobile de celui-ci ;
- une desdites parois avant des parties fixe et mobile de l'auvent comporte une série de nervures échelonnées sur la hauteur de celle-ci, et l'autre desdites parois avant comporte une encoche apte à coopérer avec lesdites nervures pour positionner selon une série de positions stables la partie mobile de l'auvent par rapport à ladite partie fixe de celui-ci ;
- ladite encoche est prévue sur la face interne de la paroi avant de la partie fixe de l'auvent et lesdites nervures font faiblement saillie de la face externe de la paroi avant de la partie mobile de celui-ci ;
- la partie fixe de l'auvent est rapportée sur le cadre, cette partie fixe comprenant une paroi avant prolongeant la paroi de façade du cadre du boîtier, et la hauteur de cette paroi avant correspondant à la largeur de la goulotte pour venir fermer localement et transversalement ladite goulotte, et la partie mobile est constituée par une paroi d'embout à partir de laquelle sont issus lesdits bras s'étendant perpendiculairement à celle-ci, ladite partie d'embout étant apte à se placer à l'extrémité libre de ladite paroi avant, perpendiculairement à cette dernière ;
- il est prévu sur les bras et sur le cadre des moyens complémentaires de blocage pour définir une série de positions stables de ladite partie mobile de l'auvent par rapport au cadre, correspondant à différentes largeurs de goulottes associées ;
- ces moyens complémentaires de blocage peuvent comprendre des encoches prévues à différentes hauteurs sur les bords externes desdits bras coopérant avec une nervure prévue sur chacune des faces internes des parois latérales correspondantes dudit cadre ;
- lesdits moyens complémentaires de blocage peuvent comprendre également des encoches prévues à différentes hauteurs sur les faces internes des parois latérales correspondantes dudit cadre, coopérant avec une nervure prévue sur chacun des bords externes desdits bras ;
- lesdits moyens complémentaires peuvent comprendre encore une série de crans prévus sur lesdits bras coopérant avec deux butées complémentaires formées à l'extrémité de deux lames souples prévues sur le cadre et faisant face auxdits bras ;
- le cadre comportant une ouverture frontale pour le passage d'une portion de l'appareillage accessible à l'usager, chaque bras présente une largeur ajustée à celle de l'espace intérieur existant entre la face interne d'un bord latéral de ladite ouverture frontale et la face interne de la paroi latérale du cadre située en regard dudit bord latéral correspondant, de sorte que cet espace intérieur forme une rainure de coulissement pour lesdits bras ;
- lesdits bras coulissent dans des rainures formées sur les faces internes des deux parois latérales dudit cadre.

La description qui va suivre en regard des dessins annexés, donnés à titre d'exemples non limitatifs, fera bien comprendre en quoi consiste l'invention, et comment elle peut être réalisée.

Sur les dessins annexés :
- la figure 1 est une vue de dessous en perspective du cadre et de l'auvent d'un mode de réalisation du boîtier selon l'invention, la partie mobile de l'auvent étant sortie au maximum par rapport à sa partie fixe ;
- la figure 2 est une vue identique à celle de la figure 1, la partie mobile de l'auvent étant rentrée au maximum dans le cadre du boîtier ;
- la figure 3 est une vue en perspective de dessus du boîtier représenté sur les figures 1 et 2 et mis en place sur une goulotte ;
- la figure 4 est une vue en coupe selon le plan A-A de la figure 3 ;
- la figure 5 est une vue en coupe de détail selon le plan B-B de la figure 3;
- la figure 6 est une vue identique à celles des figures 1 et 2, la partie mobile de l'auvent étant assemblée au cadre du boîtier en sortie de fabrication ;
- la figure 7 représente une variante de réalisation du boîtier selon l'invention, mis en place à l'extrémité d'une goulotte, et
- la figure 8 représente une autre variante de réalisation du boîtier conforme à l'invention.

Tel qu'illustré sur ces figures, et de manière connue en soi, il s'agit, globalement, de disposer, le long d'une goulotte 10 intervenant en saillie sur une paroi non représentée, un appareillage électrique, également non représenté, en mettant en oeuvre, pour ce faire, un boîtier 1.

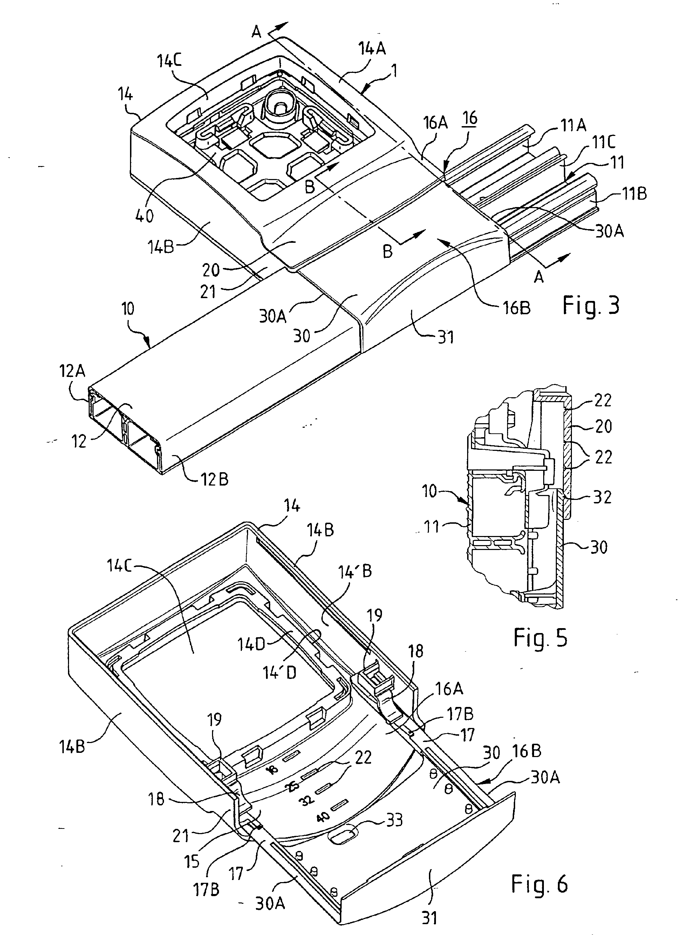

Cette disposition est plus particulièrement représentée sur la figure 3.

Dans la forme de réalisation représentée sur la figure 3, et de manière connue en soi, la goulotte 10, comporte, globalement, un socle 11, par lequel elle est adaptée à être rapportée sur la paroi à équiper, et dont la section transversale est ouverte, et un couvercle 12 qui, pour la fermeture de ce socle 11, est rapporté sur celui-ci, par exemple par encliquetage.

Le socle 11 de la goulotte est délimité latéralement par deux ailes longitudinales 11A, 11B, et son espace intérieur est longitudinalement séparé en deux parties égales par une paroi centrale 11C dont le bord supérieur arrive sensiblement au niveau des retours des ailes longitudinales 11A, 11B.

Le couvercle 12 est ici du type recouvrant, c'est-à-dire qu'il comporte des bords tombants 12A, 12B venant recouvrir les faces externes des ailes latérales 11A, 11B du socle 11 de la goulotte 10.

Le boîtier 1 intervient généralement entre deux tronçons de couvercle, un seul tronçon étant représenté sur la figure 3.

Comme cela est représenté sur les figures, le boîtier 1 comporte, d'une part, un cadre 14 qui, adapté à être rapporté sur la paroi à équiper (non représentée), le long de la goulotte 10, est apte à former un logement pour l'appareillage concerné, et, plus particulièrement, pour le mécanisme de cet appareillage, et qui, le long de celui de ses côtés par lequel il doit côtoyer la goulotte 10, présente une ouverture 15, et, d'autre part, un auvent 16 qui, s'étendant à compter du cadre 14, et plus particulièrement à partir de la partie supérieure de son ouverture 15, est destiné à couvrir localement la goulotte 10, transversalement par rapport à celle-ci, en s'étendant en pratique sur le socle 11 de cette goulotte 10, entre les deux tronçons de son couvercle 12 (voir particulièrement la figure 3).

Le cadre 14 comprend une paroi de façade 14A pourvue d'une ouverture frontale 14C pour le passage d'une portion de l'appareillage accessible à l'usager, ainsi que deux parois latérales parallèles 14B et une paroi arrière non référencée.

Le boîtier 1 se complète (voir particulièrement la figure 3) par une platine 40, qui est propre à permettre de rapporter l'ensemble sur la paroi à équiper. Le cadre 14 coiffe ladite platine 40 pour former un logement pour l'appareillage concerné, ladite platine formant un support destiné à recevoir le mécanisme d'appareillage et étant solidarisée au cadre par un système d'encliquetage ou équivalent.

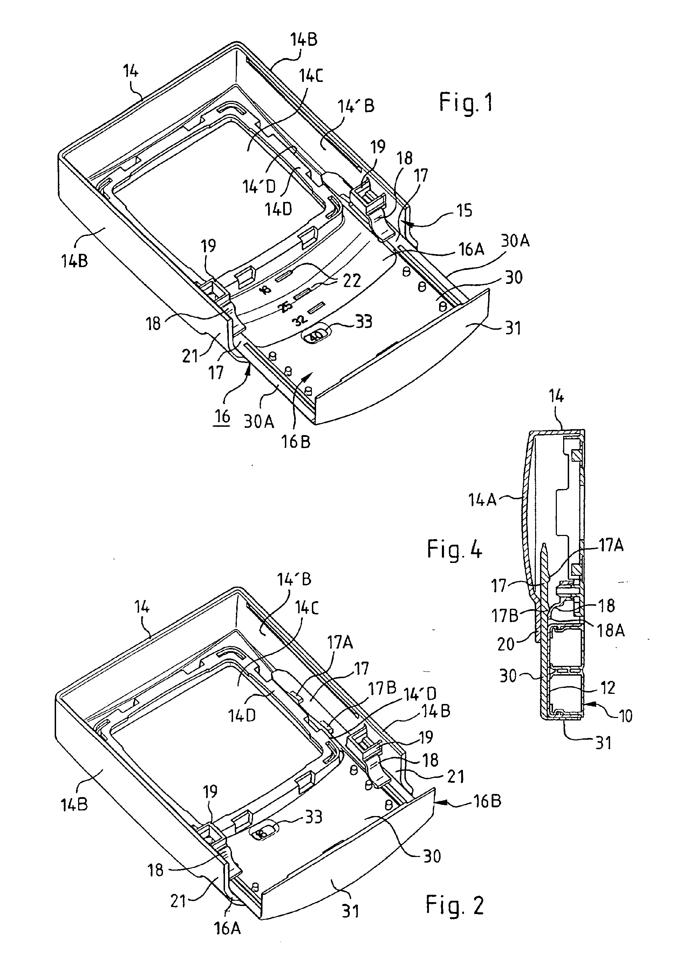

En référence plus particulièrement aux figures 1 à 6, l'auvent 16 du boîtier 1 comprend une partie fixe 16A solidaire du cadre 14, et une partie mobile 16B pourvue de deux bras parallèles 17 qui sont montés coulissants à l'intérieur du cadre de sorte que le positionnement de la partie mobile 16B de l'auvent 16 par rapport au cadre 14, et plus particulièrement par rapport à la partie fixe 16A de l'auvent, est réalisé de manière télescopique selon une série de positions stables prédéfinies correspondant à différentes largeurs de goulottes.

Selon le mode de réalisation représenté sur les figures 1 à 6, la partie fixe 16A de l'auvent 16 vient de formation avec le cadre 14 du boîtier, elle comprend, d'une part, une paroi avant 20 qui, à partir de l'ouverture 15 du cadre 14, et plus précisément à partir de la partie supérieure de cette ouverture 15, prolonge sur une certaine hauteur la paroi de façade 14A dudit cadre 14 du boîtier 1, et, d'autre part, deux parois latérales 21 prolongeant chacune une des deux parois latérales parallèles 14B du cadre 14 du boîtier.

La partie mobile 16B de l'auvent 16 comprend une paroi avant 30 dont deux bords latéraux parallèles 30A sont prolongés par les bras 17 et une paroi d'embout 31 s'étendant perpendiculairement à la paroi avant 30 à partir de son bord avant opposé aux bras, la paroi avant 30 de la partie mobile 16B de l'auvent étant apte à coulisser sous la paroi avant 20 de la partie fixe 16A de celui-ci.

Comme le montre plus particulièrement la figure 3, les parois avant 20 et 30 des parties fixe 16A et mobile 16B de l'auvent 16, ainsi que la paroi d'embout 31 de ladite partie mobile 16B, sont aptes à assurer une continuité de paroi entre les tronçons de couvercle 12, la paroi d'embout 31 de la partie mobile 16B de l'auvent 16 venant recouvrir les bords tombants des tronçons de couvercle 12 adjacents.

Selon l'exemple représenté plus particulièrement sur les figures 1, 2 et 5, la face interne de la paroi avant 20 de la partie fixe 16A de l'auvent 16 comprend une série d'encoches 22 échelonnées sur la hauteur de celle-ci, et la face externe de la paroi avant 30 de la partie mobile 16B de l'auvent 16 comprend une nervure 32 faisant faiblement saillie et apte à coopérer avec lesdites encoches 22 pour positionner, selon une série de positions stables, la partie mobile 16B de l'auvent 16 par rapport à la partie fixe 16A de celui-ci.

En outre, avantageusement, en regard des encoches 22 prévues sur la face interne de la paroi avant 20 de la partie fixe 16A de l'auvent 16, il est prévu sur cette face interne une indication numérique de la largeur ou hauteur de l'auvent, ici quatre largeurs ou hauteurs d'auvent sont prévues correspondant à quatre largeurs ou hauteurs de goulottes ou moulures associées. De plus, il est prévu, dans la paroi avant 30 de la partie mobile 16B de l'auvent 16, une fenêtre 33 permettant de visualiser l'indication numérique de la largeur ou hauteur d'auvent lorsque la partie mobile de l'auvent est positionnée dans l'une des quatre positions stables prédéfinies par rapport à la partie fixe de celui-ci.

Ainsi, sur la figure 1, la partie mobile 16B de l'auvent 16 est positionnée dans une position extrême correspondant à la plus grande largeur ou hauteur d'auvent, portant l'indication numérique 40, et, sur la figure 2, la partie mobile 16B de l'auvent 16 est positionnée dans la position extrême opposée correspondant à la plus petite largeur ou hauteur d'auvent, portant l'indication numérique 16.

Entre les deux positions extrêmes minimale et maximale, il est prévu deux positions intermédiaires portant les indications numériques 25 et 32 et correspondant à deux autres largeurs ou hauteurs de goulottes standard.

Bien entendu, selon d'autres modes de réalisation non représentés, on peut prévoir d'autres moyens complémentaires de blocage pour définir la série de positions stables de la partie mobile de l'auvent par rapport au cadre, et plus particulièrement par rapport à la partie fixe dudit auvent solidaire du cadre, et correspondant à différentes largeurs ou hauteurs de goulottes associées.

Selon une première de ces variantes, on peut prévoir qu'une desdites parois avant des parties fixe et mobile de l'auvent comporte une série de nervures échelonnées sur la hauteur de celle-ci, et l'autre desdites parois avant comporte une encoche apte à coopérer avec lesdites nervures pour positionner selon une série de positions stables ladite partie mobile de l'auvent par rapport à ladite partie fixe de celui-ci.

Dans ce cas, préférentiellement, ladite encoche est prévue sur la face interne de la paroi avant de la partie fixe de l'auvent et lesdites nervures font faiblement saillie de la face externe de la paroi avant de ladite partie mobile de celui-ci.

Les moyens complémentaires de blocage peuvent également comprendre des encoches prévues à différentes hauteurs sur les bords externes des bras de la partie mobile de l'auvent coopérant avec une nervure prévue sur chacune des faces internes des parois latérales parallèles correspondantes du cadre.

Ces moyens complémentaires de blocage peuvent également comprendre des encoches prévues à différentes hauteurs sur la face interne des parois latérales correspondantes du cadre, coopérant avec une nervure prévue sur chacun des bords externes desdits bras.

On peut également prévoir comme moyens complémentaires de blocage une série de crans prévus sur lesdits bras correspondants avec deux butées complémentaires formées à l'extrémité de deux lames souples prévues sur le cadre et faisant face auxdits bras.

Par ailleurs, avantageusement, comme le montrent plus particulièrement les figures 2 et 4, les bras 17 comprennent, sur leur face tournée vers la platine du boîtier, deux butées échelonnées en hauteur, la première butée 17A étant située à proximité de l'extrémité libre de chaque bras, la deuxième butée 17B étant positionnée à une distance plus éloignée de l'extrémité libre du bras correspondant. Ces butées 17A, 17B sont aptes à coopérer avec une butée 18A portée à l'extrémité d'une lame souple 18 solidaire du cadre 14 et tournée vers ledit bras 17 correspondant.

Chaque lame souple 18 est solidarisée au cadre 14 par l'intermédiaire d'une console 19 en forme de cadre faisant saillie de la face interne 14'B de chaque paroi latérale 14B du cadre 14 et située à proximité de l'ouverture 15 dudit cadre. Chaque lame souple 18 présente la forme générale d'un col de cygne de sorte que sa partie supérieure tournée vers un bras 17 est sensiblement plane et parallèle audit bras et porte à son extrémité libre la butée 18A.

Bien entendu, on pourrait prévoir d'autres formes adaptées pour les lames souples.

Cette coopération de butées 17A, 17B, 18A constitue avantageusement des moyens de solidarisation et de guidage des parties fixe et mobile 16A, 16B de l'auvent 16.

En effet, la première butée 17A située à proximité de l'extrémité libre de chaque bras 17 permet d'assembler de manière définitive la partie mobile 16B de l'auvent au cadre 14 du boîtier (plus particulièrement à la partie fixe 16A de l'auvent solidaire du cadre) lors de sa fabrication. Cela permet de faciliter la mise en place de l'ensemble par l'installateur, de réduire le volume de l'ensemble boîtier/auvent à conditionner et de faciliter ainsi ce conditionnement.

La position assemblée des parties fixe et mobile de l'auvent lors de la fabrication du boîtier est plus particulièrement représentée sur la figure 6. Sur cette figure 6, il est à noter que les lames souples 18 coopèrent avec les butées 17A prévues à proximité des extrémités libres des bras correspondants comme explicité ci-dessus.

Lorsque l'installateur veut positionner le boîtier le long d'une goulotte, il enfonce la partie mobile 16B de l'auvent 16 à l'intérieur du cadre 14 du boîtier de sorte que, par déformation élastique des lames souples 18, les butées 17A franchissent celles portées par lesdites lames souples, et la coopération de butées intervient alors entre les butées 17B portées par les bras et les butées 18A portées par les lames souples 18, cette coopération de butées définissant la position extrême de plus grande largeur de l'auvent correspondant à l'indication numérique 40.

En variante, seules les butées 17B peuvent être prévues sur les bras 17, auquel cas la partie mobile de l'auvent est livrée après fabrication du boîtier, en étant placée dans la position extrême de plus grande largeur de l'auvent.

En utilisation, les lames souples 18 présentes sur le cadre 14 du boîtier permettent de procurer à l'ensemble une grande élasticité. Grâce à l'élasticité de ces lames souples 18, la partie mobile 16B de l'auvent 16 peut adopter par rapport à sa partie fixe 16A, ou par rapport au cadre 14, un certain angle de part et d'autre de sa position d'alignement.

Cette disposition permet avantageusement de s'affranchir des défauts de planéité des surfaces sur lesquelles le boîtier peut être installé.

Par ailleurs, comme on peut le voir plus particulièrement sur les figures 1 et 2, chaque bras 17 présente ici avantageusement une largeur ajustée à celle de l'espace existant entre la face interne 14'D d'un bord latéral 14D de l'ouverture frontale 14C du cadre du boîtier, et la face interne 14'B de la paroi latérale 14B du cadre 14 située en regard dudit bord latéral 14D correspondant, de sorte que cet espace intérieur forme une rainure de coulissement pour ledit bras 17.

Ainsi, il n'est pas prévu de moyens supplémentaires pour le coulissement des bras à l'intérieur du cadre du boîtier.

Avantageusement, la longueur en surplus de la paroi avant 30 de la partie mobile 16B de l'auvent s'efface sous la paroi avant 20 de la partie fixe 16A de celui-ci, et les bras 17 coulissent dans un espace préexistant du cadre 14 du boîtier, de sorte que la partie mobile 16B de l'auvent n'interfère pas malencontreusement avec les autres constituants situés dans le boîtier.

Bien entendu, on pourrait prévoir, dans une variante de réalisation non représentée, que les bras 17 coulissent dans des rainures formées sur les faces internes des deux parois latérales parallèles du cadre du boîtier.

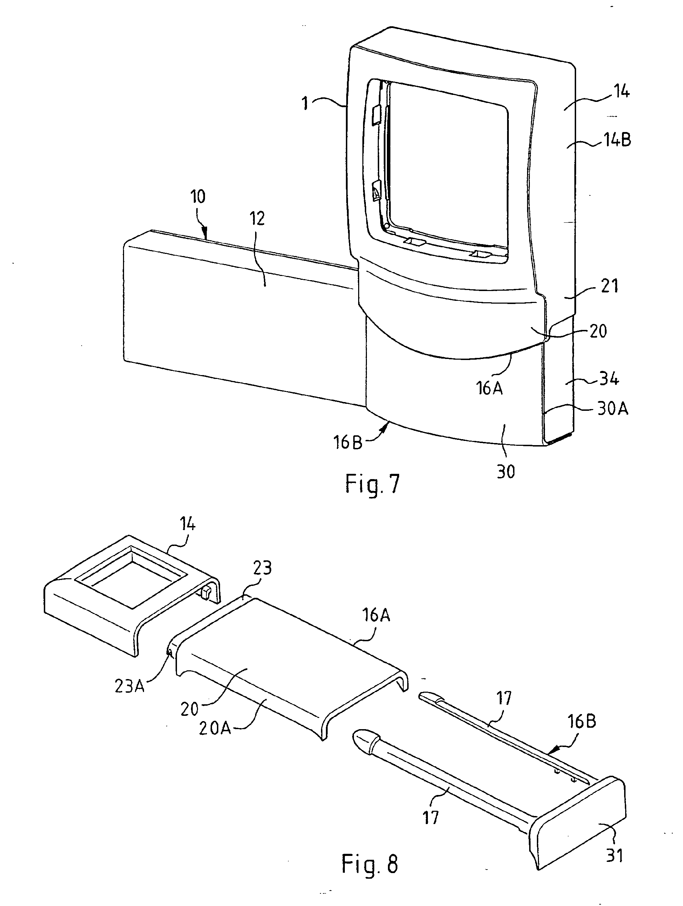

Selon une variante représentée plus particulièrement à la figure 7, lorsque le boîtier 1 est positionné à l'extrémité d'une goulotte 10, il est prévu avantageusement une paroi de fermeture, dite paroi d'embout 34, positionnée sur un côté latéral de la partie mobile 16B de l'auvent ajustée à la largeur de la goulotte et formant une continuité d'une paroi latérale 14B du cadre 14 du boîtier pour fermer cette extrémité de goulotte.

Cette paroi d'embout 34 peut être rapportée ou former une seule pièce avec la partie mobile 16B de l'auvent 16.

Sur la figure 8, on a représenté une autre variante du boîtier conforme à l'invention, selon laquelle, la partie fixe 16A de l'auvent 16 est rapportée sur le cadre 14, cette partie fixe 16A comprenant une paroi avant 20 prolongeant la paroi de façade 14A du cadre 14 du boîtier 1, la hauteur de cette paroi avant correspondant à la largeur de la goulotte associée (non représentée) pour venir fermer localement et transversalement ladite goulotte. Cette paroi avant 20 comporte, à une extrémité devant coopérer avec le cadre 14, un décrochement de paroi 23 venant s'ajuster dans l'ouverture 15 du cadre 14 du boîtier, et comportant en partie inférieure des encoches 23A pour la solidarisation du cadre 14 et de la partie fixe 16A de l'auvent.

De plus, la paroi avant 20 de la partie fixe 16A de l'auvent 16 présente des bords tombants longitudinaux 20A aptes à recouvrir les tronçons de couvercle positionnés sur la goulotte en question.

Selon cette variante, la partie mobile 16B de l'auvent 16 comprend une paroi d'embout 31 à partir de laquelle sont issus les bras 17 s'étendant perpendiculairement à celle-ci, ladite paroi d'embout 31 étant apte à se placer à l'extrémité libre de la paroi avant 20 de la partie fixe, perpendiculairement à cette dernière, pour assurer localement la continuité d'une aile latérale du socle de la goulotte, ou d'un bord tombant d'un tronçon de couvercle.

Comme cela a été décrit précédemment, les bras 17 sont munis de moyens de blocage coopérant avec des moyens complémentaires prévus sur le cadre du boîtier pour bloquer l'ensemble en position.

La partie fixe 16A de l'auvent existe en plusieurs longueurs, une pour chaque largeur ou hauteur de goulotte associée, et la course de la partie mobile 16B de l'auvent est encore optimisée, en n'étant limitée que par la longueur du cadre 14 du boîtier.

Il est bien entendu que les parties du boîtier sont réalisées en matière plastique moulée.

Les bras et les parois d'embout et avant de la partie mobile de l'auvent forment une seule pièce issue du moulage d'une matière plastique.

## Revendications

1. Boîtier (1) pour appareillage à disposer le long d'une goulotte (10) intervenant en saillie sur une paroi, qui comporte, d'une part, un cadre (14) qui, adapté à être rapporté sur cette paroi, est apte à former un logement pour l'appareillage concerné, et qui, le long d'un de ses côtés par lequel il doit côtoyer la goulotte (10), présente une ouverture (15), et, d'autre part, un auvent (16), qui, s'étendant à compter du cadre (14), en correspondance avec ladite ouverture (15), est destiné à recouvrir localement la goulotte (10), transversalement par rapport à celle-ci, **caractérisé en ce que** l'auvent (16) comprend une partie mobile (16B) pourvue de deux bras (17) parallèles qui sont montés coulissants à l'intérieur dudit cadre (14) de sorte que le positionnement de la partie mobile (16B) de l'auvent (16) par rapport au cadre (14) est réalisé de manière télescopique selon une série de positions stables prédéfinies correspondant à différentes largeurs de goulottes.

2. Boîtier (1) selon la revendication 1, **caractérisé en ce que** chaque bras (17) de la partie mobile (16B) de l'auvent (16) comprend au moins une butée (17A, 17B) apte à coopérer avec une butée (18A) portée à l'extrémité d'une lame souple (18) solidaire du cadre (14) et tournée vers ledit bras (17) correspondant.

3. Boîtier (1) selon l'une des revendications 1 ou 2, **caractérisé en ce que** l'auvent (16) comprend une partie fixe (16A) solidaire du cadre (14).

4. Boîtier (1) selon la revendication 3, **caractérisé en ce que** la partie fixe (16A) de l'auvent (16) vient de formation avec le cadre (14), cette partie fixe (16A) comprenant, d'une part, une paroi avant (20) qui, à partir de ladite ouverture (15) du cadre (14), prolonge sur une certaine hauteur la paroi de façade (14A) du cadre (14) du boîtier (1), et, d'autre part, deux parois latérales (21) prolongeant chacune une paroi latérale (14B) du cadre (14) du boîtier (1), et **en ce que** la partie mobile (16B) de l'auvent (16) comprend une paroi avant (30) dont deux bords latéraux parallèles (30A) sont prolongés par lesdits bras (17) et une paroi d'embout (31) s'étendant perpendiculairement à ladite paroi avant (30) à partir de son bord avant opposé aux bras, la paroi avant (30) de la partie mobile (16B) de l'auvent (16) étant apte à coulisser sous la paroi avant (20) de la partie fixe (16A) de celui-ci.

5. Boîtier (1) selon la revendication 4, **caractérisé en ce qu'**une (20) desdites parois avant (20, 30) des parties fixe (16A) et mobile (16B) de l'auvent (16) comporte une série d'encoches (22) échelonnées sur la hauteur de celle-ci, et l'autre (30) desdites parois avant (20, 30) comporte une nervure (32) apte à coopérer avec lesdites encoches (22) pour positionner, selon une série de positions stables, la partie mobile (16B) de l'auvent (16) par rapport à ladite partie fixe (16A) de celui-ci.

6. Boîtier (1) selon la revendication 5, **caractérisé en ce que** lesdites encoches (22) sont prévues sur la face interne de la paroi avant (20) de la partie fixe (16A) de l'auvent (16), et ladite nervure (32) fait faiblement saillie de la face externe de la paroi avant (30) de la partie mobile (16A) de celui-ci.

7. Boîtier (1) selon la revendication 4, **caractérisé en ce qu'**une desdites parois avant des parties fixe et mobile de l'auvent comporte une série de nervures échelonnées sur la hauteur de celle-ci, et l'autre desdites parois avant comporte une encoche apte à coopérer avec lesdites nervures pour positionner, selon une série de positions stables, la partie mobile de l'auvent par rapport à ladite partie fixe de celui-ci.

8. Boîtier selon la revendication 7, **caractérisé en ce que** ladite encoche est prévue sur la face interne de la paroi avant de la partie fixe de l'auvent, et lesdites nervures font faiblement saillie de la face externe de la paroi avant de la partie mobile de celui-ci.

9. Boîtier selon la revendication 3, **caractérisé en ce que** la partie fixe (16A) de l'auvent (16) est rapportée sur le cadre (14), cette partie fixe (16A) comprenant une paroi avant (20) prolongeant la paroi de façade (14A) du cadre (14) du boîtier (1), la hauteur de cette paroi avant correspondant à la largeur de la goulotte pour venir fermer localement et transversalement ladite goulotte, et **en ce que** la partie mobile (16B) est constituée par une paroi d'embout (31) à partir de laquelle sont issus lesdits bras (17) s'étendant perpendiculairement à celle-ci, ladite paroi d'embout (31) étant apte à se placer à l'extrémité libre de ladite paroi avant (20), perpendiculairement à cette dernière.

10. Boîtier (1) selon l'une quelconque des revendications 1 à 9, **caractérisé en ce qu'**il est prévu sur les bras (17) et sur le cadre (14) des moyens complémentaires de blocage pour définir une série de positons stables de la partie mobile de l'auvent par rapport au cadre, correspondant à différentes largeurs de goulottes associées.

11. Boîtier (1) selon la revendication 10, **caractérisé en ce que** lesdits moyens complémentaires de blocage comprennent des encoches prévues à différentes hauteurs sur les bords externes desdits bras coopérant avec une nervure prévue sur chacune des faces internes des parois latérales correspondantes dudit cadre.

12. Boîtier (1) selon la revendication 10, **caractérisé en ce que** lesdits moyens complémentaires de blocage comprennent des encoches prévues à différentes hauteurs sur les faces internes des parois latérales correspondantes dudit cadre, coopérant avec une nervure prévue sur chacun des bords externes desdits bras.

13. Boîtier (1) selon la revendication 10, **caractérisé en ce que** lesdits moyens complémentaires de blocage comprennent une série de crans prévus sur lesdits bras coopérant avec deux butées (18A) complémentaires formées à l'extrémité de deux lames souples (18) prévues sur le cadre et faisant face auxdits bras.

14. Boîtier (1) selon l'une quelconque des revendications précédentes, **caractérisé en ce que** le cadre comportant une ouverture frontale (14C) pour le passage d'une portion de l'appareillage accessible à l'usager, chaque bras (17) présente une largeur ajustée à celle de l'espace intérieur existant entre la face interne (14'D) d'un bord latéral (14D) de ladite ouverture frontale (14C) et la face interne (14'B) de la paroi latérale (14B) du cadre (14) située en regard dudit bord latéral (14D) correspondant de sorte que cet espace intérieur forme une rainure de coulissement pour ledit bras (17).

15. Boîtier (1) selon l'une quelconque des revendications 1 à 13, **caractérisé en ce que** lesdits bras coulissent dans des rainures formées sur les faces internes de deux parois latérales dudit cadre.

## Claims

1. Housing (1) for devices to be disposed along trunking (10) projecting from a wall, which housing includes a frame (14) adapted to be attached to said wall and to form a case for said device, an opening (15) along one side adapted to adjoin the trunking (10) and a canopy (16) which extends from the frame (14) in corresponding relationship with said opening (15) to cover the trunking (10) locally and transversely, **characterised in that** the canopy (16) has a mobile part (16B) provided with two parallel arms (17) which are slidably mounted inside said frame (14) so that the mobile part (16B) of the canopy (16) can be located relative to the frame (14) telescopically in a series of predefined stable positions corresponding to different widths of trunking.

2. Housing (1) according to claim 1, **characterised in that** each arm (17) of the mobile part (16B) of the canopy (16B) includes at least one abutment (17A, 17B) adapted to cooperate with an abutment (18A) at the end of a flexible blade (18) fastened to the frame (14) and facing toward said corresponding arm (17).

3. Housing (1) according to claim 1 or 2,
**characterised in that** the canopy (16) has a fixed part (16A) fastened to the frame (14).

4. Housing (1) according to claim 3, **characterised in that** the fixed part (16A) of the canopy (16) is formed with the frame (14) and includes a front wall (20) which extends from said opening (15) of the frame (14) over some of the height of the fronting wall (14A) of the frame (14) of the housing (1) and two lateral walls (21) each extending a lateral wall (14B) of the frame (14) of the housing (1) and **in that** the mobile part (16B) of the canopy (16) has a front wall (30) with two parallel lateral edges (30A) extended by said arms (17) and an end wall (31) extending perpendicularly to said front wall (30) from its front edge opposite the arms, the front wall (30) of the mobile part (16B) of the canopy (16) being adapted to slide under the front wall (20) of its fixed part (16A).

5. Housing (1) according to claim 4, **characterised in that** one (20) of said front walls (20, 30) of the fixed (16A) and mobile (16B) parts of the canopy (16) includes a series of notches (22) staggered over its height and the other (30) of said front walls (20, 30) includes a rib (32) adapted to cooperate with said notches (22) to locate the mobile part (16B) of the canopy (16) in a series of stable positions relative to its fixed part (16A).

6. Housing (1) according to claim 5, **characterised in that** said notches (22) are provided on an inside face of the front wall (20) of the fixed part (16A) of the canopy (16) and said rib (32) projects a small distance from an outside face of the front wall (30) of its mobile part (16A).

7. Housing (1) according to claim 4, **characterised in that** one of said front walls of the fixed and mobile parts of the canopy includes a series of ribs staggered over its height and the other of said front walls includes a notch adapted to cooperate with said ribs to locate the mobile part of the canopy in a series of stable positions relative to its fixed part.

8. Housing according to claim 7, **characterised in that** said notch is provided on an inside face of the front wall of the fixed part of the canopy and said ribs project a small distance from an outside face of the front wall of its mobile part.

9. Housing according to claim 3, **characterised in that** the fixed part (16A) of the canopy (16) is fastened to the frame (14) and includes a front wall (20) extending the fronting wall (14A) of the frame (14) of the housing (1), the height of said front wall corresponding to the width of the trunking in order to close said trunking locally and transversely, and **in that** the mobile part (16B) has an end wall (31) from which said arms (17) extend perpendicularly, said end wall (31) being adapted to be placed at the free end of said front wall (20), perpendicularly thereto.

10. Housing (1) according to any of claims 1 to 9, **characterised in that** the arms (17) and the frame (14) are provided with complementary immobilising means to define a series of stable positions of the mobile part of the canopy relative to the frame, corresponding to different widths of the associated trunking.

11. Housing (1) according to claim 10,
**characterised in that** said complementary immobilising means include notches provided at different heights on outside edges of said arms and adapted to cooperate with a rib provided on an inside face of each of the corresponding lateral walls of said frame.

12. Housing (1) according to claim 10,
**characterised in that** said complementary immobilising means include notches provided at different heights on inside faces of corresponding lateral walls of said frame cooperating with a rib provided on an outside edge of each of said arms.

13. Housing (1) according to claim 10,
**characterised in that** said complementary immobilising means include a series of detents provided on said arms cooperating with two complementary abutments (18A) formed at the end of two flexible blades (18) provided on the frame and facing said arms.

14. Housing (1) according to any preceding claim, **characterised in that** the frame has a front opening (14C) for a portion of the device accessible to a user, and each arm (17) has a width matching that of a space between an inside face (14'D) of one lateral edge (14D) of said front opening (14C) and an inside face (14'B) of the lateral wall (14B) of the frame (14) facing the corresponding lateral edge (14D) so that said interior space forms a groove in which said arm (17) slides.

15. Housing (1) according to any of claims 1 to 13, **characterised in that** said arms slide in grooves formed on inside faces of two lateral walls of said frame.

## Patentansprüche

1. Gerätedose (1), die entlang eines an einer Wand vorstehenden Kabelkanals (10) angeordnet werden soll, mit einerseits einem Rahmen (14), der, zum Ansetzen an die Wand geeignet, eine Aufnahme für das betreffende Gerät zu bilden vermag und der entlang einer seiner Seiten, mit der er am Kabelkanal (10) entlanggeführt werden soll, eine Öffnung (15) aufweist, und anderseits mit einer Schutzabdeckung (16), die in Übereinstimmung mit der Öffnung (15) vom Rahmen (14) aus verlaufend dazu bestimmt ist, den Kabelkanal (10) quer zu diesem lokal zu verdecken,
**dadurch gekennzeichnet, dass** die Schutzabdeckung (16) einen beweglichen Teil (16B) umfasst, der mit zwei parallelen Armen (17), die innen im Rahmen (14) leitend gelagert sind, so versehen ist, dass das Positionieren des beweglichen Teils (16B) der Schutzabdeckung (16) in Bezug auf den Rahmen (14) teleskopisch entsprechend einer Reihe vorgegebener stabiler Positionen erfolgt, die unterschiedlichen Kabelkanalbreiten entsprechen.

2. Dose (1) nach Anspruch 1,
**dadurch gekennzeichnet, dass** jeder Arm (17) des beweglichen Teils (16B) der Schutzabdeckung (16) wenigstens einen Anschlag (17A, 17B) umfasst, der mit einem Anschlag (18A) zusammenzuwirken vermag, der am Ende eines elastischen Blättchens (18) ruht, das mit dem Rahmen (14) fest verbunden ist und zu dem entsprechenden Arm (17) weist.

3. Dose (1) nach einem der Ansprüche 1 oder 2,
**dadurch gekennzeichnet, dass** die Schutzabdeckung (16) einen mit dem Rahmen (14) fest verbundenen feststehenden Teil (16A) aufweist.

4. Dose (1) nach Anspruch 3,
**dadurch gekennzeichnet, dass** der feststehende Teil (16A) der Schutzabdeckung (16) an den Rahmen (14) angeformt ist, wobei der feststehende Teil (16A) einerseits eine Vorderwand (20) aufweist, die von der Öffnung (15) des Rahmens (14) ausgehend die Stirnwand (14A) des Rahmens (14) der Dose (1) über eine bestimmte Höhe verlängert, und andererseits zwei Seitenwände (21) die jeweils eine Seitenwand (14B) des Rahmens (14) der Dose (1) verlängern, und dass der bewegliche Teil (16B) der Schutzabdeckung (16) eine Vorderwand (30), deren beide parallelen seitlichen Ränder (30A) durch die Arme (17) verlängert sind, und eine Endwand (31) aufweist, die von ihrem vorderen, den Armen entgegengesetzten Rand aus senkrecht zur Vorderwand (30) verläuft, wobei die Vorderwand (30) des beweglichen Teils (16B) der Schutzabdeckung (16) unter die Vorderwand (20) ihres feststehendem Teils (16A) zu gleiten vermag.

5. Dose (1) nach Anspruch 4,
**dadurch gekennzeichnet, dass** eine (20) der Vorderwände (20, 30) des feststehenden (16A) und des beweglichen (16B) Teils der Schutzabdeckung (16) eine Reihe von Schlitzen (22) aufweist, die über deren Höhe verteilt angeordnet sind, und die andere (30) der Vorderwände (20, 30) eine Rippe (32) aufweist, die mit den Schlitzen (22) zusammenzuwirken vermag, um den beweglichen Teil (16B) der Schutzabdeckung (16) bezüglich ihres feststehenden Teils (16A) entsprechend einer Reihe stabiler Positionen zu positionieren.

6. Dose (1) nach Anspruch 5,
**dadurch gekennzeichnet, dass** die Schlitze (22) an der Innenseite der Vorderwand (20) des feststehenden Teils (16A) der Schutzabdeckung (16) vorgesehen sind, und an der Außenseite der Vorderwand (30) ihres beweglichen Teils (16A) die Rippe (32) geringfügig vorsteht.

7. Dose (1) nach Anspruch 4,
**dadurch gekennzeichnet, dass** eine der Vorderwände des feststehenden und des beweglichen Teils der Schutzabdeckung eine Reihe von Rippen aufweist, die über deren Höhe verteilt angeordnet sind, und die andere Vorderwand einen Schlitz aufweist, der mit den Rippen zusammenzuwirken vermag, um den beweglichen Teil der Schutzabdeckung bezüglich ihres feststehenden Teils entsprechend einer Reihe stabiler Positionen zu positionieren.

8. Dose nach Anspruch 7,
**dadurch gekennzeichnet, dass** der Schlitz an der Innenseite der Vorderwand des feststehenden Teils der Schutzabdeckung vorgesehen ist, und an der Außenseite der Vorderwand ihres beweglichen Teils die Rippen geringfügig vorstehen.

9. Dose nach Anspruch 3,
**dadurch gekennzeichnet, dass** der feststehende Teil (16A) der Schutzabdeckung (16) auf den Rahmen (14) aufgesetzt ist, wobei der feststehende Teil (16A) eine die Stirnwand (14A) des Rahmens (14) der Dose (1) verlängernde Vorderwand (20) aufweist, wobei zum lokalen Verschließen des Kabelkanals in Querrichtung die Höhe dieser Vorderwand der Breite des Kabelkanals entspricht, und dass der bewegliche Teil (16B) durch eine Endwand (31) gebildet ist, von der die quer zu dieser verlaufenden Arme (17) ausgehen, wobei die Endwand (31) an dem freien Ende der Vorderwand (20) quer zu dieser angeordnet zu werden vermag.

10. Dose (1) nach einem der Ansprüche 1 bis 9,
**dadurch gekennzeichnet, dass** an den Armen (17) und am Rahmen (14) komplementäre Arretiermittel vorgesehen sind, um bezüglich des Rahmens eine Reihe stabiler Positionen des beweglichen Teils der Schutzabdeckung festzulegen, die unterschiedlichen Breiten der zugeordneten Kabelkanäle entsprechen.

11. Dose (1) nach Anspruch 10,
**dadurch gekennzeichnet, dass** die komplementären Arretiermittel an den Außenrändern der Arme Schlitze in unterschiedlichen Höhen aufweisen, die mit einer Rippe zusammenwirken, die an jeder Innenseite der entsprechenden Seitenwände des Rahmens vorgesehen ist.

12. Dose (1) nach Anspruch 10,
**dadurch gekennzeichnet, dass** die komplementären Arretiermittel an den Innenseiten der entsprechenden Seitenwände des Rahmens Schlitze in unterschiedlichen Höhen aufweisen, die mit einer an jedem Außenrand des Rahmens vorgesehenen Rippe zusammenwirken.

13. Dose (1) nach Anspruch 10,
**dadurch gekennzeichnet, dass** die komplementären Arretiermittel an den Armen eine Reihe von Rastkerben aufweisen, die mit zwei komplementären Anschlägen (18A) zusammenwirken, die am Ende der beiden am Rahmen vorgesehenen und den Armen gegenüberliegenden elastischen Blättchen (18) gebildet sind.

14. Dose (1) nach einem der vorhergehenden Ansprüche,
**dadurch gekennzeichnet, dass** jeder Arm (17), da der Rahmen eine stirnseitige Öffnung (14C) zum Hindurchführen eines Teils des dem Benutzer zugänglichen Geräts aufweist, eine Breite hat, die derjenigen des Innenraums angepasst ist, der zwischen der Innenseite (14'D) eines Seitenrands (14D) der stirnseitigen Öffnung (14C) und der Innenseite (14'B) der dem entsprechenden Seitenrand (14D) gegenüberliegenden Seitenwand (14B) des Rahmens (14) besteht, so dass der Innenraum eine Nut zum Gleiten des Arms (17) bildet.

15. Dose (1) nach einem der Ansprüche 1 bis 13,
**dadurch gekennzeichnet, dass** die Arme in den an den Innenseiten der beiden Seitenwände des Rahmens gebildeten Nuten gleiten.
